# EUROPEAN PATENT SPECIFICATION

(11) **EP 1 179 813 B1**
(45) Date of publication and mention of the grant of the patent: **09.06.2010**
(21) Application number: 00306695.8
(22) Date of filing: 07.08.2000
(51) Int. Cl.: G07F 5/18, G07F 7/08

(54) **Method and apparatus for performing value transactions**
Verfahren und Vorrichtung zur Durchführung von Werttransaktionen
Procédé et dispositif pour effectuer des transactions de valeur

(43) Date of publication of application: 13.02.2002
(73) Proprietor: MEI, Inc., West Chester, PA 19380 (US)
(72) Inventor: Campbell, Bernard Joseph, Sherfield-on-Loddon Hampshire RG27 0ED (GB); Waine, Peter James, Chobham GU24 8DZ (GB)
(74) Representative: Peterreins, Frank

(56) References cited:
- EP-A- 0 363 122
- GB-A- 2 312 772
- US-A- 5 491 326
- US-A- 5 650 761
- US-A- 5 753 899

## Description

This invention relates to methods and apparatus for performing value transactions.

Conventional vending machines dispense products or perform services in exchange for cash deposited in the machine. Some machines can be operated by portable data-carrying devices, such as smart cards, which contain a credit value forming "electronic cash". Smart cards storing electronic cash can also be used to pay for goods at attended tills and the like. The stored electronic cash is decremented in accordance with the value of the purchased products or service, and can be replenished using a revaluation terminal. Normally, the user has to insert cash into the revaluation terminal, but it is known also to provide a system whereby the payment for the electronic cash is deducted directly from the wages of the user. This latter system would normally be a closed site system in which the revaluation terminals and vending machines are accessible only to employees of a certain organisation.

It would be desirable to provide a more versatile and convenient system for enabling transactions.

GB-A-2312772 relates to a prepayment supply system for electricity, gas or water comprises a prepayment token, typically a memory card or a smart card, into which credit data representative of an amount of credit or an amount of the commodity is entered by a vending machine in return for payment. The token is then inserted into a commodity supply control device, typically a meter, to enable the supply of an amount of the commodity determined by the credit data. The system includes simple vending machines 44 each of which communicates by phone with a system manager 40 which periodically downloads a list of tokens requiring some kind of special action to the vending machines. On recognising a token on the list, the vending machine automatically performs the special action.

The invention provides a transaction system as set out in claim 1.

Aspects of the present invention are set out in the accompanying claims. Various independent aspects are combined in a preferred embodiment of the invention, to be described below, which provides for controlled and flexible revaluation of data-carrying devices, comprehensive collection of transaction information and flexibility of operation enabling increased functionality.

The present invention is primarily, although not exclusively, concerned with closed site systems incorporating a number of transaction devices such as attended points of sale, vending machines and/or revaluation terminals, at least some, but not necessarily all, of the transaction devices being capable of communication with a server (for example being connected in a Local Area Network).

According to one aspect of the invention, the server is operable to receive instructions relating to an individual portable data-carrying device and in response thereto to cause predetermined operations to be performed automatically by any one of a plurality of transaction units in response to that transaction unit reading that data-carrying device.

This technique could be used for revaluation (i.e. adding credit to the data-carrying device). When a revaluation transaction unit receives an appropriate data-carrying device, the stored credit value is increased in accordance with a chosen revaluation amount, and a confirmation message is sent by the revaluation unit to the server. The server then performs a cancelling operation, so that the instructions are not carried out repeatedly.

In this way, a revaluation process can be instructed centrally, without restricting the actual revaluation operation to a specified terminal, and preferably without requiring any special operation on the part of the cardholder. This technique is particularly useful in the preferred embodiment of the invention in which the server receives revaluation instructions from a Wide Area Network, such as the internet.

In accordance with a further aspect of the invention, the server is operable to send to the transaction units messages which include identifiers for data-carrying devices. When a matching data-carrying device is received by a transaction unit, the unit is operable to perform any selected one of a number of different types of operations under the control of the server. This operation could be defined by the original message sent to the transaction devices, or could be defined by a further communication between the server and an individual transaction unit which takes place in response to receipt of a matching data-carrying device. Once the operation has been performed, the server can send cancelling messages to the other transaction units.

This aspect of the invention can be used for a variety of purposes, including revaluation of cards, issuing of free prizes, discounts, "blacklisting" of cards, etc.

In accordance with another aspect of the invention, the server collects transaction data relating to the transactions carried out using respective data-carrying devices. The transaction information includes the current credit values stored on the data-carrying devices. However, there are preferably provisions to allow for the fact that there may be transaction devices which are not part of the LAN, so that the server is unable to collect information relating to transactions performed by those units. Accordingly, the server is preferably operable to correct credit data in response to a transaction unit reading a different amount from a data-carrying device, which will occur if the data-carrying device has previously been used in a stand-alone transaction unit.

In accordance with a preferred aspect, the server is operable also to store revaluation data in respect of each data-carrying device, this representing an amount by which the credit value on the device should be increased. This is stored separately from the record of the current credit amount, which, as indicated above, may be inaccurate. When a data-carrying device is inserted into a transaction unit on the LAN, the revaluation amount can be added to the value stored on the device and the credit value stored on the server could be updated to take into account both any inaccuracies and the increased value resulting from the addition of the revaluation amount.

According to a further preferred aspect of the invention, the server is operable to authorise the transfer of a revaluation amount to a data-carrying device in progressive stages. This places a limit on the average rate at which the value on the data-carrying device can be spent, which may be particularly useful for some situations (for example when the transaction system is installed in a school and used by pupils, and where parents wish to have greater control over their children's spending behaviour).

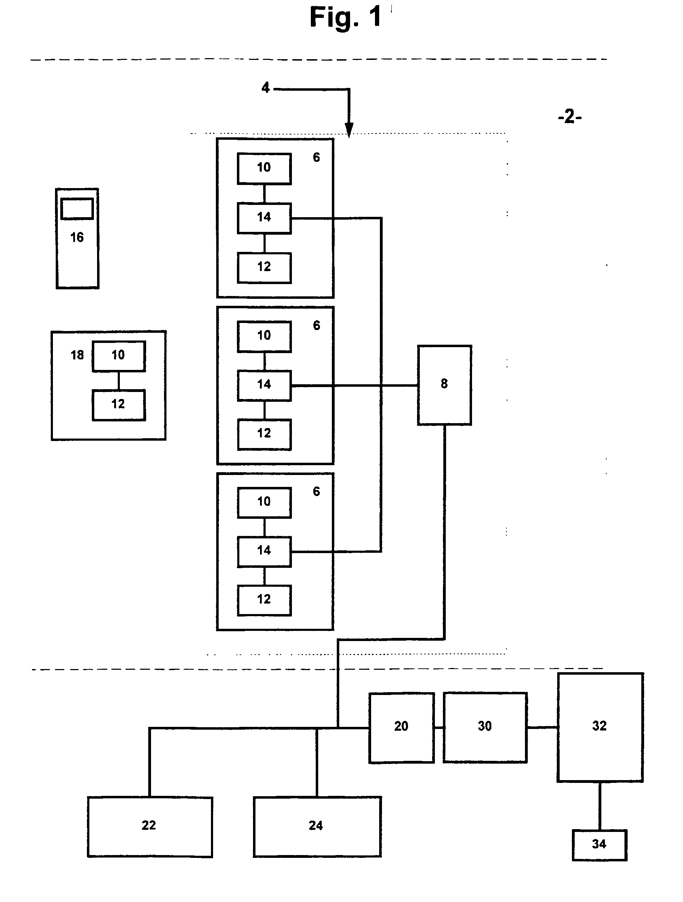

An arrangement embodying the invention will now be described by way of example with reference to the accompanying drawing, Figure 1, which schematically shows a transaction system in accordance with the present invention.

The transaction system 2 comprises a LAN 4 incorporating a plurality of transaction units 6 connected via a standard network arrangement to a unit server 8. Each transaction unit 6 houses a purchasing unit 10, a card reader 12 and a point-of-sale (POS) LAN module 14. The purchasing unit 10 is operable to permit or record purchases, and may be a vending machine, or a cafeteria till into which purchase details are entered manually or by using machine-reading techniques. The card reader 12 is operable to read and write data stored by data-carrying devices, in the form of smart cards, one of which is shown schematically at 16. Information collected from the purchasing unit 10 and the card reader 12 can be conveyed to the server 8 via the module 14.

In this embodiment, the transaction units 6 are capable of use both for purchasing and revaluation of credit data stored by the data-carrying devices. As an alternative, these functions could be carried out by separate units.

The transaction system 2 also has one or more additional stand-alone transaction units 18, which are not connected to the LAN 4, but which additionally have purchasing units 10 and card readers 12.

Purchasing units 10 in the form of vending machines may additionally be capable of accepting cash, instead of requiring the use of a smart card.

The server 8 in this embodiment is connected to a data centre 20 which handles data from this transaction system 2 and other transaction systems such as those shown schematically at 22 and 24. It is envisaged that each transaction system 2, 22, 24, etc. would be associated with a respective specific customer of a transaction system operator, and possibly with a specific geographical site. The data centre 20 would be associated with the operator.

The data centre 20 is connected to a web server 30 which is operable to communicate with a wide area network schematically illustrated at 32, and preferably formed by the internet. This permits individuals (such as schematically illustrated at 34) with PC access to the internet to transfer data to and from the web server 30.

There are a number of user accounts associated with the transaction system 2, each user account being associated with an identifier stored on a respective data-carrying device 16 which is provided for the account holder. For each account, the unit server 8 stores a record including the following data:
1. the card identifier;
2. the current credit amount;
3. revaluation data;
4. the details (including purchased product codes and prices) of the last 10 transactions associated with the account; and
5. activity data, discussed further below.

The same data is stored (together with the relevant data for other transaction systems 22, 24) in the data centre 20 and the web server 30. Data exchange between the unit server 8, data centre 20 and web server 30 occurs regularly, so that any changes made to the data in any of the units are propagated to the other units.

Assuming that the transaction system operator has provided to each account holder (a) a data-carrying device storing an identifier representing the account, (b) a personal identification number (PIN) enabling use of the data-carrying device and (c) an account code (which may correspond to the identifier stored by the data-carrying device and and/or a number printed on the device), then the system operates as follows.

An account holder can arrange to add or increase the value of credit on an associated data-carrying device 16. This can be achieved without requiring the account holder to have the device in his possession. This is particularly suitable therefore for situations in which the payment is made by an individual who is not necessarily the person that uses the device. For example, if the transaction system is for the use of pupils in schools, the payments can be made by parents without requiring the devices carried by the pupils.

The payments can be made in a number of ways. The parent may post a cheque to the transaction system operator, as a result of which a revaluation amount, corresponding to the value of the cheque, will be entered against the relevant account details stored in the data centre 20. Alternatively, payment could be made by sending appropriate credit card details from a terminal 34 to the web server 30 via the internet 32. Other systems which are known in themselves for effecting payments via the internet could be used, for example transferring instructions to a third party organisation which then arranges for an e-mail to be sent to the intended recipient of the payment (in this case the transaction system operator) and for value to be taken from the account of the parent and placed in the account of the third party, and the corresponding amount to be taken from the account of the third party and placed in an account associated with the transaction system operator.

As a result of this operation, a revaluation amount is stored in either the data centre 20 or the web server 30. After the next regular exchange of data, this revaluation amount is stored in the unit server 8, the data centre 20 and the web server 30.

The transaction system operator is able to enter into the data centre 20 an identifier representing a particular data-carrying device, for the purpose of "blacklisting" the device, i.e. rendering it inoperable, for example if the operator is notified that the device has been lost or stolen. This information is also distributed to the unit server 8 and the web server 30.

The data centre 20 is also arranged to perform operations which may result in instructions relating to individual accounts. For example, there could be an operation to select an account at random and then store, in association with the selected account, data representing that a free prize is to be awarded to the associated card holder. Alternatively, or additionally, the data centre may be arranged to take into account the number and/or nature of transactions which have been performed in relation to a particular account to determine whether free prizes and/or discounts should be granted to the cardholder. The results of any such operations are stored by the data centre and, following information exchange, by the unit server 8 and the web server 30.

For each account, the unit server stores activity data, which comprises an "activity flag" and an "activity description". The activity flag is set whenever the unit server detects that an operation is required to be performed by a transaction unit in respect of a particular account. The activity description is set to represent the details of the operation or operations to be carried out in respect of each account for which the activity flag is set.

The activity flag stored by the unit server 8 would thus be set in the event that any of the above-mentioned operations (for example blacklisting, revaluation, awarding of free prizes, etc.) is required to be carried out in respect of a particular data-carrying device. The state of the flags is examined following information exchange, and the unit server 8 is arranged to send to each of the transaction units 6 a list of all identifiers associated with set activity flags.

A cardholder can make purchases at a transaction unit 6 by inserting his data-carrying device into the card reader 12. The operation may be arranged to be enabled only if the cardholder then inserts the correct PIN into a keyboard. This step may be dispensed with, particularly if the purchasing units 10 are attended tills. The value of any purchases made using the purchasing unit 10 is deducted from the credit amount stored on the data-carrying device. Following the transaction, details of the transaction including the product code and prices and the card identifier are transmitted to the unit server 8, together with the updated credit amount now stored by the device 16.

If, on the other hand, the transaction unit 6 finds a match between the identifier of the data-carrying device 16 and one of the identifiers associated with a set activity flag and received from the unit server 8, then the transaction unit 6 is arranged to send a message to the unit server 8 to indicate that this match has been found. The unit server 8 then sends to the relevant transaction unit 6 an instruction which identifies the operation to be performed, as defined by the activity description. As a result, a revaluation amount may be added to the credit amount stored on the data-carrying device 16, or an alert device (not shown) on the transaction unit 6 may be operated to indicate (using an audio and/or visual transducer) that a free prize is to be awarded. Other operations may include the transfer of predetermined data to the device 16, so as to enable the device to trigger discounts when subsequently used in transaction units, or to render the device ineffective. The latter purpose could also be achieved by the transaction unit 6 erasing data stored in the device 16. There may also be an operation for loading the stored credit value onto a new data-carrying device, with a new identifier, when an existing device is disabled.

The unit server 8 is also operable (if desired in response to a confirmation message from the transaction unit 6 that the desired operation has been performed) to clear the activity flag associated with the card identifier, and transmit to the other units 6 an indication that the flag has been cleared so that the identifier can be deleted from the lists stored thereby.

At the end of the transaction, the unit server 8 receives data representing the credit amount now stored on the data-carrying device, this then being stored by the unit server in place of the previously-stored value.

At least some of the data stored on the web server 30 can be accessed by an account holder via the internet 32. In order to access this data the account holder would normally have to insert into his terminal 34 data representing his account number and a password. The account holder can then readily view a list of the last predetermined number (e.g. 10) of purchases, the amount currently stored on his device 16, etc.

In a particularly preferred embodiment of the invention, the stored revaluation data in the unit server 8, data centre 20 and web server 30 can include, instead of a simple revaluation amount, data representing a period over which the revaluation amount is to be transferred to the data-carrying device 16. The specific manner in which this can be achieved can be chosen in many ways. For example there may be stored (i) a total revaluation amount, (ii) the number of stages over which the amount is to be transferred to the device 16, and (iii) the overall minimum period throughout which the transfer is to occur. In any event, the overall effect is to cause the credit value to be stored by the device 16 to be increased in several successive stages, rather than in a single stage, with the amounts and/or interval between stages being controlled in accordance with the stored revaluation data. An increase in credit value takes place whenever the data-carrying device 16 is inserted into any of the transaction units 6, so long as the rate of transfer does not exceed a permitted maximum This places a limit to the rate at which the stored credit amount can be spent.

In the embodiment described above, it is possible for data, e.g. representing a desired operation, to be generated at several points (e.g. the unit server 8, the data centre 20, etc.). Also, there could be at any given time, several instructions to perform corresponding operations (e.g. revaluations) in respect of the same smart card. Accordingly, it is preferred that each instruction relating to a smart card be provided with a unique transaction identifier, this identifier being generated at the location representing the source of the instruction. The information exchange between the unit server 8, the data centre 20 and the web server 30 would involve also the transfer of the transaction identifiers, so as to ensure that no instruction is overwritten or duplicated.

The information exchange can be protected by conventional cryptographic techniques.

The described embodiment can be varied in many ways. The functions performed by the unit server 8 and the data centre 20 could be combined. Alternatively, the web server 30 and data centre 20 could be combined. Indeed, they could both be omitted, though in this case the unit server 8 is preferably capable of communicating directly with the internet 32. This would allow access to the stored information by the cardholder, and also the transmission of instructions, such as revaluation amounts, to the unit server 8, possibly using electronic mail.

In the arrangement described above, the unit server 8 sends to the transaction units 6 identifiers representing data-carrying devices for which specific operations are to be carried out, but data describing the operation itself is transmitted only to a transaction unit which has read the relevant device. This reduces the amount of data traffic on the LAN 4, while still permitting rapid recognition of particular data-carrying devices which require operations to be carried out. Alternative possibilities include:
(1) arranging for the server to transmit not just device identifiers but also data representing the operations to be performed, this information being sent to each transaction unit so that the transaction unit can perform the operation without requiring additional information from the unit server 8. When the transaction unit 6 provides the unit server 8 with an acknowledgement that the operation has been carried out, the unit server 8 will send cancelling instructions to the other transaction units 6.
(2) The initial transfer of information to all the transaction units 6 can be avoided by arranging for each transaction unit to transmit to the unit server 8 the identifier of each device read by the unit, so that this identifier can be checked against the data stored by the unit server. The unit server will then respond with a message indicating whether an operation needs to be carried out or not, and if so the details of the operation.

The system could combine several of these procedures. For example, the unit server could send a separate "blacklist" identifying cards to be disabled, so that this operation could be performed autonomously, e.g. by the card reader 12 as well as a generic "activity" list for which additional operational data defining the operation to be performed must be requested separately.

The transaction system 2 described above is particularly suitable for closed site environments, but nevertheless allows external transfer of funds into the system from outside the environment, for example using the internet. This arrangement allows enhanced flexibility, especially if the system additionally allows credit to be removed from a data-carrying device and transferred to a specified account, preferably via the internet. In this way, a visitor or temporary employee at the site can be provided with a data-carrying device and easily arrange for transfer of funds to the device to enable its use. When the use of the device is no longer required, the account can be cancelled and the device disabled. The user then can recover any remaining credit on the card (which would be stored in the unit server 8, the data centre 20 and the web server 30), by accessing the transaction system via the internet 32 and issuing appropriate instructions so that the funds are transferred to a specified personal account.

It is envisaged that the identifier stored by each data-carrying device will include a part which is associated with the particular unit server 8 with which the device may be used, together with a further part which identifies a particular account. Transaction units 6 are arranged so that no operations are permitted unless the first part identifies the unit server 8 to which they are connected.

## Claims

1. A transaction system (2) comprising at least one transaction unit (6) operable to communicate with a portable data-carrying device (16) carrying an identifier and a credit value, the transaction system (2) storing revaluation data, and the transaction unit (6) being operable to increase the credit data stored by the data-carrying device (16) in a progressive manner at a plurality of stages requiring successive communications with the data-carrying device (16), the maximum rate at which the credit value is increased being determine by the revaluation data.

2. A transaction system (2) as claimed in claim 1 comprising a network (4) which includes:
(a) a plurality of transaction units (6) each operable to communicate with a plurality of portable data-carrying devices (16) carrying respective identifiers and each being operable to perform a transaction in response to an authorisation involving a communication with a data-carrying device (16); and
(b) server means (8) for storing data representing a list of identifiers and operation data associated with each of the identifiers in the list in a database; the system (2) being arranged such that a transaction unit (6) is automatically operable, in response to communicating with a data-carrying device (16) carrying an identifier corresponding to an identifier stored by the database, to perform an operation defined by the operation data associated with the identifier.

3. A transaction system as claimed in claim 2, where the database is capable of storing operation data representing a revaluation amount, and the transaction unit (6) is operable to increase a credit value stored by the data-carrying device (16) by an amount dependent upon said revaluation amount.

4. A transaction system as claimed in claim 2 or claim 3, wherein the database is operable to store operation data representing a cancellation instruction, and where the transaction device (6) is operable in response to that operation data to alter data stored by the data-carrying device (16) to render it inoperable for future use with said transaction units (6).

5. A transaction system as claimed in any of claims 2 to 4, wherein each transaction unit (6) comprises alert means for providing an audio or visual indication to a holder of a data-carrying device, and wherein each transaction unit (6) is selectively operable in response to said operation data to activate said alert means.

6. A transaction system as claimed in any of claims 2 to 5 including means for adding identifiers and operation data to said database in response to remotely-provided instructions.

7. A transaction system as claimed in claim 6, including means (30) connected to a wide area network (32) for receiving the instructions.

8. A transaction system as claimed in claim 7, wherein said receiving means (30) is connected to the internet (32).

9. A transaction system as claimed in any of claims 2 to 8 wherein said server means (8) is operable to transmit identifiers stored thereby to each transaction unit (6), the transaction units (6) each comparing identifiers carried by data-carrying devices (16) read thereby with the identifiers received from the server means (8).

10. A transaction system as claimed in claim 9, wherein each transaction unit (6) is operable, upon finding a match between an identifier of a data-carrying device (16) read by the unit (6) and an identifier received from the server means (8), to send a message requesting operation data from the server means (8).

11. A transaction system as claimed in claim 9 or claim 10, wherein each transaction unit (6) is operable, upon performing an operation defined by said operation data, to send an acknowledgment to the server means (8), the server means (8) then being operable to transmit cancelling messages to each of the other transaction units (6) so that the identifier is no longer considered in the comparing operation.

12. A transaction system as claimed in claim 1 comprising a network including
(a) a plurality of transaction units (6) each operable to communicate with a portable data-carrying device (16), the devices storing respective identifiers and credit values;
(b) server means (8) storing a database comprising, for each of a plurality of identifiers, (i) a credit value and (ii) revaluation data;
(c) means for receiving instructions and for altering said revaluation data in accordance with the instructions; and
(d) means responsive to the reading, by a transaction unit (6), of an identifier stored by a data-carrying device (16) for (i) increasing the credit value stored by the data-carrying device (16) by an amount dependent upon said revaluation data and (ii) altering the credit value stored in the database to match that stored by the data-carrying device (16), thereby taking into account any discrepancies between the credit value formerly stored in the database compared with the credit amount previously stored by the data-carrying device (16), and the increase of the credit value dependent upon the revaluation data.

13. A transaction system as claimed in claim 12, the transaction system including a further transaction unit (18) which is not connected to the server means (8) but which is operable to alter the credit amount stored by a data-carrying device (16).

## Patentansprüche

1. Transaktionssystem (2) umfassend mindestens eine Transaktionseinheit (6), funktionsfähig, um mit einer tragbaren Datenträgervorrichtung (16), die einen Identifikator und einen Guthabenwert trägt, zu kommunizieren, wobei das Transaktionssystem (2) Neubewertungsdaten speichert, und wobei die Transaktionseinheit (6) funktionsfähig ist, um die Guthabendaten, die durch die Datenträgervorrichtung (16) gespeichert werden, auf eine progressive Art und Weise an einer Mehrzahl von Stufen zu erhöhen, aufeinander folgende Nachrichtenübertragungen mit der Datenträgervorrichtung (16) erfordernd, wobei die maximale Rate, um welche der Guthabenwert erhöht wird, durch die Neubewertungsdaten bestimmt wird.

2. Transaktionssystem (2) gemäß Anspruch 1, umfassend ein Netzwerk (4), welches beinhaltet:
(a) eine Mehrzahl von Transaktionseinheiten (6), wobei jede funktionsfähig ist, um mit einer Mehrzahl von tragbaren Datenträgervorrichtungen (16) zu kommunizieren, die entsprechende Identifikatoren tragen und die funktionsfähig sind, um eine Transaktion in Reaktion auf eine Autorisierung durchzuführen, die eine Nachrichtenübertragung mit einer Datenträgervorrichtung (16) mit sich bringt; und
(b) Servermittel (8) zum Speichern von Daten, die eine Liste von Identifikatoren repräsentieren, und von Betriebsdaten, die mit jedem der Identifikatoren in der Liste verbunden sind, in einer Datenbank; wobei das System (2) angeordnet ist, sodass eine Transaktionseinheit (6) automatisch funktionsfähig ist, in Reaktion auf Nachrichtenübertragung mit einer Datenträgervorrichtung (16), die einen Identifikator trägt, der mit einem Identifikator übereinstimmt, der durch die Datenbank gespeichert wird, um eine Operation, definiert durch die Betriebsdaten, die mit dem Identifikator verbunden sind, durchzuführen.

3. Transaktionssystem nach Anspruch 2, wobei die Datenbank fähig ist, Betriebsdaten zu speichern, die einen Neubewertungsbetrag repräsentieren, und die Transaktionseinheit (6) funktionsfähig ist, um einen Guthabenwert, der durch die Datenträgervorrichtung (16) gespeichert wird, um einen Betrag zu erhöhen, der von dem Neubewertungsbetrag abhängt.

4. Transaktionssystem nach Anspruch 2 oder 3, wobei die Datenbank funktionsfähig ist, um Betriebsdaten zu speichern, die eine Löschungsanweisung repräsentieren, und wobei die Transaktionsvorrichtung (6) funktionsfähig ist, in Reaktion auf diese Betriebsdaten, Daten zu verändern, die durch die Datenträgervorrichtung (16) gespeichert werden, um sie für zukünftige Verwendung mit den Transaktionseinheiten (6) funktionsunfähig zu machen.

5. Transaktionssystem nach Anspruch 2 bis 4, wobei jede Transaktionseinheit (6) Wammittel zur Bereitstellung einer akustischen oder visuellen Anzeige an einen Besitzer einer Datenträgervorrichtung umfasst, und wobei jede Transaktionseinheit (6) auswählbar funktionsfähig ist, um in Reaktion auf die Betriebsdaten die Warnmittel zu aktivieren.

6. Transaktionssystem nach einem der Ansprüche 2 bis 5, beinhaltend Mittel zum Hinzufügen von Identifikatoren und Betriebsdaten zu der Datenbank in Reaktion auf fern bereitgestellte Anweisungen.

7. Transaktionssystem nach Anspruch 6, beinhaltend Mittel (30), verbunden mit einem Wide-Area-Network (32) zum Empfangen der Anweisungen.

8. Transaktionssystem nach Anspruch 7, wobei das Empfangsmittel (30) mit dem Internet (32) verbunden ist.

9. Transaktionssystem nach einem der Ansprüche 2 bis 8, wobei das Servermittel (8) funktionsfähig ist, um Identifikatoren, die **dadurch** gespeichert werden, an jede Transaktionseinheit (6) zu übertragen, wobei die Transaktionseinheiten (6) jede die durch sie gelesenen Identifikatoren, die durch Datenträgervorrichtungen (16) getragen werden, mit den Identifikatoren, die von dem Servermittel (8) empfangen werden, vergleichen.

10. Transaktionssystem nach Anspruch 9, wobei jede Transaktionseinheit (6) funktionsfähig ist, um eine Nachricht zu senden, die Betriebsdaten von dem Servermittel (8) anfordert, sobald eine Übereinstimmung zwischen einem Identifikator einer Datenträgervorrichtung (16), die durch die Einheit (6) gelesen wird, und einem Identifikator, der von dem Servermittel (8) empfangen wird, gefunden wird.

11. Transaktionssystem nach einem der Ansprüche 9 oder 10, wobei jede Transaktionseinheit (6) funktionsfähig ist, sobald eine Operation, definiert durch die Betriebsdaten, durchgeführt wird, um eine Bestätigung zu dem Servermittel (8) zu senden, wobei das Servermittel (8) dann funktionsfähig ist, um Löschungsnachrichten zu jeder der anderen Transaktionseinheiten (6) zu senden, sodass der Identifikator nicht länger in der Vergleichsoperation berücksichtigt wird.

12. Transaktionssystem nach Anspruch 1, umfassend ein Netzwerk beinhaltend:
(a) eine Mehrzahl von Transaktionseinheiten (6), wobei jede funktionsfähig ist, um mit einer tragbaren Datenträgervorrichtung (16) zu kommunizieren, wobei die Vorrichtungen jeweilige Identifikatoren und Guthabenwerte speichern;
(b) Servermittel (8), das eine Datenbank speichert, die für jeden der Mehrzahl von Identifikatoren (i) einen Guthabenwert und (ii) Neubewertungsdaten umfasst;
(c) Mittel zum Empfangen von Anweisungen und zum Verändern der Neubewertungsdaten in Übereinstimmung mit den Anweisungen; und
(d) Mittel, die reaktionsfähig auf eine Erfassung durch eine Transaktionseinheit (6) eines Identifikators, der durch eine Datenträgervorrichtung (16) gespeichert wird, zum (i) Erhöhen des Guthabenwertes, der durch die Datenträgervorrichtung (16) gespeichert wird, um einen Betrag, der von den Neubewertungsdaten abhängt und (ii) Verändern des Guthabenwertes, der in der Datenbank gespeichert ist, um diesen mit dem, der durch die Datenträgervorrichtung (16) gespeichert wird, abzugleichen, und **dadurch** jegliche Diskrepanzen zwischen dem Guthabenwert, der bis dahin in der Datenbank gespeichert war, im Vergleich mit dem Guthabenbetrag, der vorher durch die Datenträgervorrichtung (16) gespeichert war, und die Erhöhung des Guthabenwertes abhängig von den Neubewertungsdaten, zu berücksichtigen.

13. Transaktionssystem nach Anspruch 12, wobei das Transaktionssystem eine weitere Transaktionseinheit (18) beinhaltet, die nicht mit dem Servermittel (8) verbunden ist, sondern die funktionsfähig ist, um den Guthabenbetrag, der durch eine Datenträgervorrichtung (16) gespeichert wird, zu verändern.

## Revendications

1. Système (2) de transaction comportant au moins une unité (6) de transaction qui peut être mise en oeuvre pour communiquer avec un dispositif (16) portable porteur de données portant un identifiant et une valeur de crédit, le système (2) de transaction stockant une donnée de réévaluation, et l'unité (6) de transaction pouvant être mise en oeuvre pour augmenter la donnée de crédits stockée par le dispositif (16) porteur de données de manière progressive avec une pluralité d'étapes nécessitant des communications successives avec le dispositif (16) porteur de données, le taux maximal auquel la valeur de crédit est augmentée étant déterminé par la donnée de réévaluation.

2. Système (2) de transaction selon la revendication 1 comportant un réseau (4) qui comporte
(a) une pluralité d'unités (6) de transaction dont chacune peut être mise en oeuvre pour communiquer avec une pluralité de dispositifs (16) porteurs de données portant des identifiants respectifs et chacun pouvant être mis en oeuvre pour réaliser une transaction en réponse à une autorisation nécessitant une communication avec un dispositif (16) porteur de données ;
(b) un moyen (8) de serveur pour stocker des données représentant une liste d'identifiants et des données d'opération associées avec chacun des identifiants dans la liste dans une base de données ; le système (2) étant conçu de telle manière qu'une unité (6) de transaction est automatiquement mise en oeuvre, en réponse à une communication avec un dispositif (16) porteur de données portant un identifiant correspondant à un identifiant stocké par la base de données, pour réaliser une opération définie par la donnée d'opération associée avec l'identifiant.

3. Système de transaction selon la revendication 2, dans lequel la base de données est capable de stocker une donnée d'opération représentant un montant de réévaluation, et l'unité (6) de transaction est mise en oeuvre pour augmenter une valeur de crédit stockée par le dispositif (16) porteur de données d'une quantité dépendant dudit montant de réévaluation.

4. Système de transaction selon l'une des revendications 2 ou 3, dans lequel la base de données est mise en oeuvre pour stocker des données d'opération représentant une instruction d'annulation, et dans lequel le dispositif (6) de transaction est mis en oeuvre en réponse à cette donnée d'opération pour modifier les données stockées par le dispositif (16) porteur de données pour le rendre non fonctionnel pour une utilisation future avec lesdites unités (6) de transaction.

5. Système de transaction selon l'une quelconque des revendications 2 à 4, dans lequel chaque unité (6) de transaction comporte des moyens d'alerte pour fournir une indication auditive ou visuelle à un porteur d'un dispositif porteur de données, et dans lequel chaque unité (6) de transaction est mise en oeuvre de manière sélective en réponse à ladite donnée d'opération pour activer lesdits moyens d'alerte.

6. Système de transaction selon l'une quelconque des revendications 2 à 5 comportant des moyens pour ajouter des identifiants et des données d'opération à ladite base de données en réponse à des instructions fournies à distance.

7. Système de transaction selon la revendication 6, comportant des moyens (30) connectés à un réseau (32) de grande portée pour recevoir les instructions.

8. Système de transaction selon la revendication 7, dans lequel lesdits moyens de réception (30) sont connectés à Internet (32).

9. Système de transaction selon l'une quelconque des revendications 2 à 8, dans lequel ledit moyen (8) de serveur est mis en oeuvre pour transmettre des identifiants stockés ainsi à chaque unité (6) de transaction, les unités (6) de transaction comportant chacune des identifiants portés par les dispositifs (16) porteurs de données lus ainsi avec les identifiants reçus depuis le moyen de serveur (8).

10. Système de transaction selon la revendication 9, dans lequel chacune unité (6) de transaction est mise en oeuvre, lorsque l'on trouve une correspondance entre un identifiant d'un dispositif (16) porteur de données lu par l'unité (6) et un identifiant reçu depuis le moyen de serveur (8), pour envoyer un message nécessitant une opération de données du moyens formant serveur (8).

11. Système de transaction selon l'une des revendications 9 ou 10, dans lequel chaque unité (6) de transaction est mise en oeuvre, lors de la réalisation d'une opération définie par ladite donnée d'opération, pour envoyer un accusé de réception au moyen de serveur (8), le moyen de serveur (8) étant alors mis en oeuvre pour transmettre des messages d'annulation à chacune des autres unités (6) de transaction de façon que l'identifiant ne soit plus désormais considéré dans l'opération de comparaison.

12. Système de transaction selon la revendication 1 comportant un réseau comportant:
(a) une pluralité d'unités (6) de transaction dont chacune est mise en oeuvre pour communiquer avec un dispositif (16) porteur de données, les dispositifs stockant des identifiants respectifs et des valeurs de crédit ;
(b) un moyen (8) de serveur stockant une base de données comportant, pour chacun d'une pluralité d'identifiants, (i) une valeur de crédit et (ii) une donnée de réévaluation ;
(c) des moyens pour recevoir des instructions et pour modifier ladite donnée de réévaluation en fonction des instructions ; et
(d) des moyens répondant à la lecture, par une unité de transaction (6), d'un identifiant stocké par un dispositif (16) porteur de données pour (i) augmenter la valeur de crédit stockée par le dispositif (16) porteur de données d'une quantité dépendant de ladite donnée de réévaluation et (ii) modifier la valeur de crédit stockée dans la base de données pour être en concordance avec celle stockée par le dispositif (16) porteur de données, en prenant ainsi en compte toute discordance entre la valeur de crédit préalablement stockée dans la base de données comparée avec la quantité de crédit préalablement stockée par le dispositif (16) porteur de données, et l'augmentation de la valeur de crédit dépendant de la donnée de réévaluation.

13. Système de transaction selon la revendication 12, le système de transaction comportant une unité (18) de transaction supplémentaire qui n'est pas connectée au moyen (8) de serveur, mais qui est mise en oeuvre pour modifier la quantité de crédit stockée par un dispositif (16) porteur de données.
